# EUROPÄISCHE PATENTSCHRIFT

(11) **EP 4 469 256 B1**
(45) Veröffentlichungstag und Bekanntmachung des Hinweises auf die Patenterteilung: **27.08.2025**
(21) Anmeldenummer: 23702517.6
(22) Anmeldetag: 25.01.2023
(51) Int. Cl.: B29C 45/14, H01H 39/00, B29C 45/00, B29L 31/34

(54) **VERFAHREN ZUR HERSTELLUNG EINES LEITERS FÜR EINEN STROMTRENNER, LEITER FÜR EINEN STROMTRENNER SOWIE STROMTRENNER**
METHOD FOR PRODUCING A CONDUCTOR FOR A CIRCUIT BREAKER, CONDUCTOR FOR A CIRCUIT BREAKER, AND CIRCUIT BREAKER
PROCÉDÉ DE PRODUCTION D'UN CONDUCTEUR POUR UN SÉPARATEUR DE COURANT, CONDUCTEUR POUR UN SÉPARATEUR DE COURANT ET SÉPARATEUR DE COURANT

(30) Priorität: 25.01.2022 AT 500312022
(43) Veröffentlichungstag der Anmeldung: 04.12.2024
(73) Patentinhaber: Astotec Automotive GmbH, 2552 Hirtenberg (AT)
(72) Erfinder: MARKER, Ludwig, 2560 Grillenberg (AT); AIGNER, Kurt, 1130 Wien (AT); RASSY, Sami, 2500 Baden (AT); HABA, Dietmar, 2542 Kottingbrunn (AT); MAHIR, Brkic, 7210 Mattersburg (AT); ART, Wolfgang, 7201 Neudörfl (AT)
(74) Vertreter: Müllner, Martin
(86) Internationale Anmeldenummer: PCT/AT2023/060016
(87) Internationale Veröffentlichungsnummer: WO 2023/141668

(56) Entgegenhaltungen:
- WO-A1-2021/168493
- JP-B2- 4 569 864
- US-A1- 2005 083 164
- US-A1- 2020 194 203

## Beschreibung

### Technisches Gebiet

Die vorliegende Erfindung betrifft ein Verfahren zur Herstellung eines Leiters für einen Stromtrenner, der zwischen zwei Leiterenden eine abzutrennende Platine aufweist, wobei der Leiter eine Leiterumspritzung aufweist, die einen Hohlraum besitzt, in dem sich die Platine befindet, wobei weiters Kunststoffschmelze über zumindest einen Anguss in eine Spritzgussform gespritzt wird, in der sich der Leiter befindet. Sie betrifft weiters einen durch solch ein Verfahren herstellbaren Leiter mit Leiterumspritzung sowie einen Stromtrenner mit solch einem Leiter.

### Stand der Technik

Pyrotechnische Stromtrenner finden in Elektrofahrzeugen mittlerweile immer weitere Verbreitung. Der Grund liegt darin, dass Fahrzeuge mit kleiner Leistung durch die Kombination von Schützen und Sicherungen zuverlässig absicherbar sind, während sich bei mittleren und höheren Leistungen ein Strombereich zwischen der Stromtrage- und Trennfähigkeit der Schütze und dem zeitgerechten Auslösebereich der Sicherung ausbildet, der nicht ausreichend abgesichert ist. Für die Stromtrenner im Hochvoltbereich gibt es viele Beispiele, in der
patcit0001:AT 522735 B --.
   von Hirtenberger ist ein typischer Aufbau gezeigt. Kennzeichnendes Element dieser Stromtrenner mit stark reduzierter Außenwirkung ist eine Umspritzung des Leiters, wodurch ein durchgehender Spalt zwischen dem Kunststoff des Gehäuses und dem Leiter vermieden oder zumindest minimiert wird und dadurch das Austreten heißer Gase verhindert wird.
patcit0002:WO WO 2021/168493 A --.
   zeigt ebenfalls einen Aufbau mit pyrotechnischem Stromtrenner mit Leiter, Trennkolben und Leiterumspritzung. Hierbei sind in Spritzgusswerkzeugen Vorsprünge vorgesehen, damit der Leiter während des Spritzgießens eingekerbt wird. Dies stellt eine kostengünstige Möglichkeit zur Einkerbung des Leiters dar.
patcit0003:WO WO 2021/207773 A --.
   zeigt einen pyrotechnischen Stromtrenner mit ähnlichem Aufbau wie
patcit0004:WO WO 2021/168493 A --.
   . Hierbei ist allerdings zumindest eine Sollbruchstelle des Leiters mit Polymermaterial gefüllt, damit die Stabilität des Leiters verbessert wird.
patcit0005:DE 10065535 A --.
   beschreibt ein Verfahren zum Herstellen einer zumindest teilweise mit Gießharz umgossenen Sammelschiene zum Verbinden einer Kraftfahrzeug-Lampeneinheit, wobei das Herstellungsverfahren eine Gießform verwendet, welche über einen Anguss und einen Angussverteiler das Gießharz zur Sammelschiene führt, wobei die teilweise mit Gießharz gegossene Sammelschiene einen Hohlraum aufweist und der Anguss und der Angussverteiler in einem seitlichen Randbereich der Sammelschiene außerhalb des Hohlraums angeordnet sind.
patcit0006:JP H0774451 A --.
   beschreibt ein Verfahren zum Herstellen einer gegossenen Leiterplattenanordnung, die einen Hohlraum aufweist, wobei zur Herstellung eine flexible Leiterplatte in eine Gussform gelegt wird und über einen Anguss das thermoplastische Harz zur flexiblen Leiterplatte strömt, dabei erfolgt der Anguss aus dem Hohlraum.

Beim Spritzgießen unterscheidet man Anguss, Angussverteiler, Anschnitt und das eigentliche Spritzgussteil. Unter Anguss versteht man das Zufuhrrohr, das sich normalerweise konisch erweitert, bzw. das Material, das nach dem Entformen dort verbleibt. Unter Angussverteiler versteht man die Kanäle, die sich vom Anguss zum eigentlichen Spritzgussteil erstrecken, bzw. das Material, das dort nach dem Entformen verbleibt. Ein Angussverteiler ist nur notwendig, wenn der Anguss nicht direkt in das eigentliche Spritzgussteil mündet. Unter Anschnitt versteht man den Übergang vom Anguss (bzw. wenn vorhanden vom Angussverteiler) zum eigentlichen Spritzgussteil. Normalerweise wird dort der Angussverteiler samt Anguss vom Spritzgussteil abgetrennt, abgeschnitten. Schließlich ist manchmal auch noch ein Füllraum zwischen Anguss und Angussverteiler vorgesehen, damit die Kanäle des Angussverteilers gleichmäßig mit Material versorgt (gefüllt) werden. Das dort nach dem Entformen verbleibende Material wird im Folgenden als Füllraumkunststoff bezeichnet.

Bisher erfolgt die Herstellung der Leiterumspritzung über (zumindest) zwei Angüsse von außen. Die Schwierigkeit dieser Verfahren der Leiterumspritzung liegt im Verzug der Leiterumspritzung und der Ausbildung von Bindenähten im besonders durch einen allfälligen Lichtbogen druckbelasteten Bereich der Leiterumspritzung, weil das Material auf dem Weg bis nach innen, wo sich der Lichtbogen ausbildet, bereits deutlich abkühlt. Unter Bindenaht versteht man die Fläche, wo sich der Kunststoff, der von einem Anguss (oder einem Kanal eines Angussverteilers) stammt, mit dem Kunststoff, der von einem anderen Anguss (oder einem anderen Kanal) stammt, vereinigt. Dort ist die Festigkeit oft reduziert, weil der Kunststoff zum Zeitpunkt des Zusammenfließens bereits relativ kühl ist, die beiden Kunststoffstränge also nicht mehr vollkommen miteinander verschmelzen.

### Darstellung der Erfindung

Es ist Aufgabe der vorliegenden Erfindung, ein Verfahren der eingangs genannten Art zu schaffen, bei dem diese Schwierigkeiten weniger stark auftreten.

Diese Aufgabe wird durch ein Verfahren der eingangs genannten Art erfindungsgemäß dadurch gelöst, dass der Anguss aus dem leiterdurchsetzten Hohlraum erfolgt, wobei die Kunststoffschmelze vom Anguss zur eigentlichen Leiterumspritzung durch einen Angussverteiler strömt.

Erfindungsgemäß erfolgt das Spritzgießen also von innen nach außen, sodass das Material an der Innenseite der Leiterumspritzung, also am Rand des Hohlraums, wo sich der Lichtbogen ausbildet, noch relativ heiß ist, wenn es aus verschiedenen Kanälen des Angussverteilers zusammenfließt. Auch ist der Verzug reduziert, weil der Angussverteiler ein unterschiedliches Schrumpfen des Spritzgussteils in verschiedenen Richtungen erschwert.

Der Anguss samt Angussverteiler kann aus der Leiterumspritzung entfernt werden, sodass sich ein Produkt ähnlich dem Stand der Technik ergibt. Dies ist in einfacher Weise bereits im Spritzgusswerkzeug möglich, beispielsweise durch Abstanzen oder mittels eines Auswerfers.

Alternativ dazu kann man vorsehen, dass der Leiter ein Loch hat und dass der Anguss mittels eines Stempels, der durch dieses Loch geführt wird, abgetrennt wird. Beim Herstellen der Leiterumspritzung sollte darauf geachtet werden, dass der Anguss hinter dem Loch möglichst keine Querschnittsvergrößerung aufweist, um das Abtrennen nicht unnötig zu erschweren.

Eine dritte Möglichkeit besteht darin, dass der Anguss samt Angussverteiler durch Drehen des Angusses entfernt wird.

Vorteilhafterweise verbleibt der Anguss jedoch in der Leiterumspritzung, sodass sich ein Leiter ergibt, bei dem im Hohlraum der Leiterumspritzung der Anguss samt Angussverteiler vorhanden ist. Dadurch können weitere Funktionen erzielt werden, wie z.B. eine Zentrierung der Platine beim weiteren Zusammenbau des Stromtrenners. Bei der Auslösung des Stromtrenners wird der Anguss samt Angussverteiler im Bereich der Anschnitte von der Leiterumspritzung abgetrennt. Bei einem Stromtrenner, in dem solch ein Leiter verbaut ist, kann ein Abbremsen der Platine im Verlauf des Trennvorgangs realisiert werden: Der in der Regel konische Anguss kann beispielsweise in einer zylindrischen Bohrung abgebremst werden.

Die Festigkeit der Verbindung zwischen Anguss und Platine kann erhöht werden, wenn der Angussverteiler zumindest teilweise schirmförmig ist. Unter "schirmförmig" wird verstanden, dass der Angussverteiler die Form einer Kreisscheibe hat; unter "teilweise schirmförmig", dass er die Form von zumindest einem Kreissektor hat. Eine schirmförmige oder teilweise schirmförmige Ausbildung bewirkt im Vergleich zu dünnen Kanälen eine gleichmäßigere Verteilung des flüssigen Kunststoffs und außerdem eine stabilere Verbindung zwischen Leiterumspritzung und Anguss. Der Angussverteiler, der aus mehreren Kanälen bestehen kann oder wie eben erwähnt auch schirmförmig sein kann, kann aus dem Anguss direkt oder über einen Füllraum mit der Kunststoffschmelze versorgt werden. Eine Versorgung über einen Füllraum hat bei der Herstellung den Vorteil, dass sich die Kunststoffschmelze gleichmäßig verteilt, was insbesondere bei einem schirmförmigen Angussverteiler andernfalls schwierig zu erreichen ist. In diesem Fall ergibt sich beim fertigen Produkt, dass zwischen dem Anguss und dem Angussverteiler ein Füllraumkunststoff vorhanden ist, der sich im Vergleich zum Anguss weiter in Richtung der Wand des Hohlraums erstreckt. Da der Füllraumkunststoff im Normalfall am Leiter anliegt, wird auch dadurch die Festigkeit der Verbindung zwischen Anguss und Leiter erhöht.

Zur Erhöhung der Festigkeit der Verbindung zwischen Anguss und Platine ist es weiters vorteilhaft, wenn die Platine ein Loch besitzt und sich zumindest ein Teil des Angusses durch dieses Loch erstreckt und vorzugsweise hinter dem Loch einen größeren Querschnitt aufweist, als es dem Querschnitt des Lochs entspricht. Im Gegensatz zu der oben beschriebenen Ausführung, bei der der Anguss mittels eines Stempels durch das Loch abgetrennt wird, ist hier eine Querschnittsvergrößerung hinter dem Loch günstig.

Nach einer Ausgestaltung der Erfindung ist vorgesehen, dass der Angussverteiler durch mehrere Kanäle gebildet ist, deren Anbindung an die Leiterumspritzung im seitlichen Randbereich des Leiters erfolgt, insbesondere dass die Anbindung der Kanäle an die Leiterumspritzung Sollbruchstellen des Leiters berührt. Gemeint ist damit, dass die Anschnitte dort liegen, wo die seitlichen Kanten des Leiters in die Leiterumspritzung eintreten. Dies kann beispielsweise durch vier Anschnitte neben dem Leiter in der Leiterebene realisiert werden. Die Geometrie der Nut (zumeist U, V oder W-förmig) kann in diesem Fall im Anschnittbereich weitergeführt werden. Das ist insofern günstig, als der Kern der Spritzgussform, der einen in die Sollbruchstellen ragenden Vorsprung hat, kreissymmetrisch ausgeführt werden kann. Die Sollbruchstellen werden dann teilweise vom Kunststoff ausgefüllt, nämlich in dem verbleibenden Spalt zwischen dem Vorsprung des Kerns und der Sollbruchstelle.

Dabei ist es günstig, wenn die Kanäle paarweise gegenüberliegen, bezogen auf die Achse des Hohlraums der Leiterumspritzung. Durch diese Symmetrie wird der Verzug beim Abkühlen möglichst gering gehalten. Besonders günstig ist es, wenn zusätzlich eine Symmetrie bezüglich der Ebene gegeben ist, die die Längsachse des Leiters und die Achse des Hohlraums enthält, und/oder bezüglich der Ebene, die die Normale auf die Längsachse des Leiters und die Achse des Hohlraums enthält.

Alternativ dazu kann man aber auch vorsehen, dass die Anbindung des Angussverteilers an die Leiterumspritzung in einer Ebene erfolgt, die einen Abstand zum Leiter aufweist, vorzugsweise einen Abstand von zumindest 1 mm, besonders bevorzugt um zumindest 2 mm. Dadurch ergibt sich nach dem Trennvorgang ein besonders hoher Isolationswiderstand. Dies liegt daran, dass beim Trennvorgang des Leiters auch der Anguss von der Leiterumspritzung abgetrennt wird, und zwar im Bereich der Anschnitte. Dadurch entstehen raue Bereiche, auf denen sich Rückstände des Abbrands des Kupfers nach der Trennung bevorzugt absetzen. Wenn diese keinen direkten Kontakt zum Leiter haben, ist dies für den Isolationswiderstand günstig. Im einfachsten Fall bildet man diesen Abstand durch ein Versetzen der Trennebenen der Kerne des Umspritzwerkzeugs aus, sofern der Anschnitt über diese Ebene erfolgt. Der Versatz erfolgt vorzugsweise in Richtung des Zünders.

Ein Abstand der Anschnitte zum Leiter ist auch dann gegeben, wenn der Angussverteiler zwei Verteilerkanäle hat, die normal auf die Längsachse des Leiters stehen. Durch diese Anordnung kann der Verzug des Hohlraums gering gehalten werden. Ohne spezielle Maßnahmen wäre die Schrumpfung im Bereich des Leiters geringer als rechtwinkelig dazu, weil der Leiter dem Schrumpfen entgegen wirkt. Wenn die Kanäle rechtwinkelig zur Längsachse des Leiters liegen, dann bieten diese auch in dieser Richtung einen Widerstand gegen das Schrumpfen, was die Abweichung vom ideal kreisförmigen Querschnitt reduziert. Ein weiterer Vorteil ist, dass die Bindenähte sich in dem durch den Leiter verstärkten Bereich ausbilden.

Wie oben erwähnt, können die Anschnitte im Bereich des Leiters liegen, was insbesondere bedingt, dass sie in der Leiterebene liegen. Dazu ist es zweckmäßig, wenn der Leiter im Bereich des Eintretens in die Leiterumspritzung eine Querschnittsverringerung besitzt, wobei bevorzugt die Querschnittsverringerung durch seitliche Einschnitte am Leiter gebildet ist. Auf diese Weise steht zusätzlicher Raum für die Anschnitte zur Verfügung.

Wie zuvor bei der Variante mit in der Leiterumspritzung verbleibendem Anguss beschrieben wurde, kann auch bei den Varianten mit entferntem Anguss der Anschnitt in Kontakt mit dem Leiter stehen oder davon entfernt seien. Sind die Anschnitte nicht im Kontakt mit dem Leiter, ergeben sich dieselben Vorteile wie zuvor beschrieben. Dies gilt auch für das Versetzen der Anschnitte aus der Leiterebene.

### Kurze Beschreibung der Zeichnungen

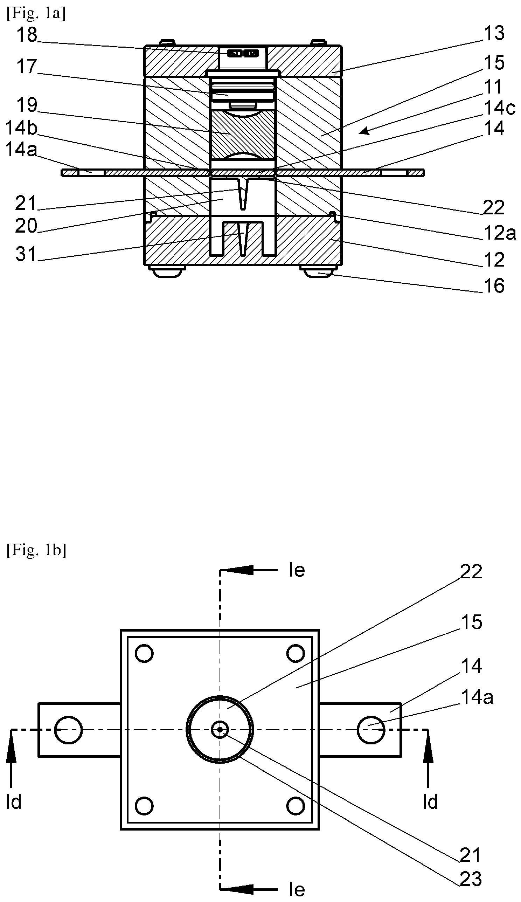

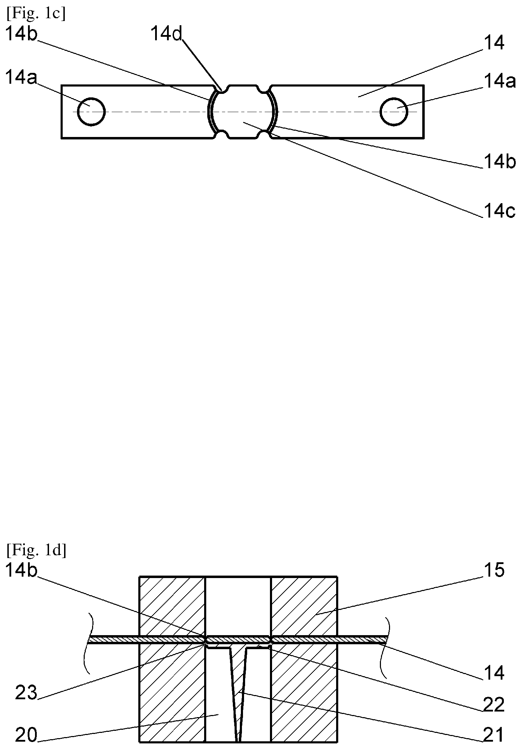

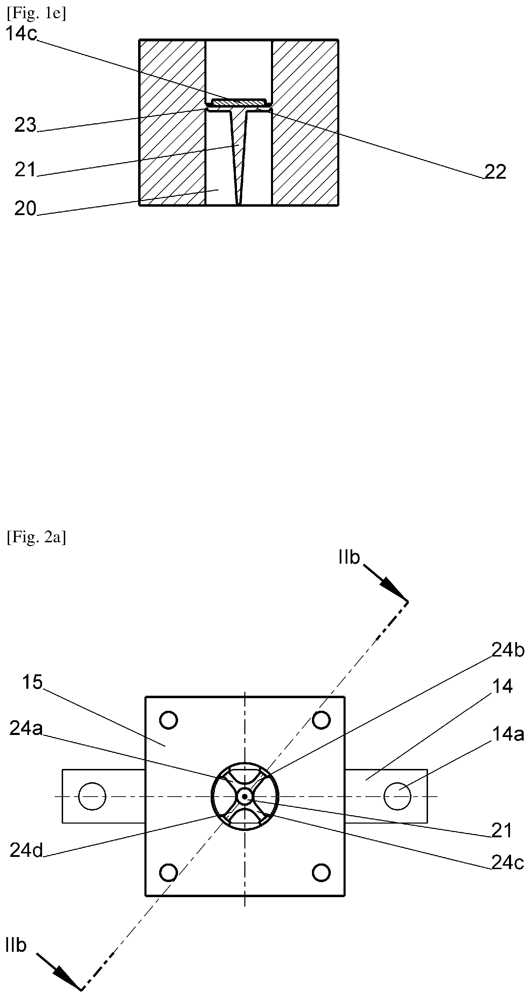

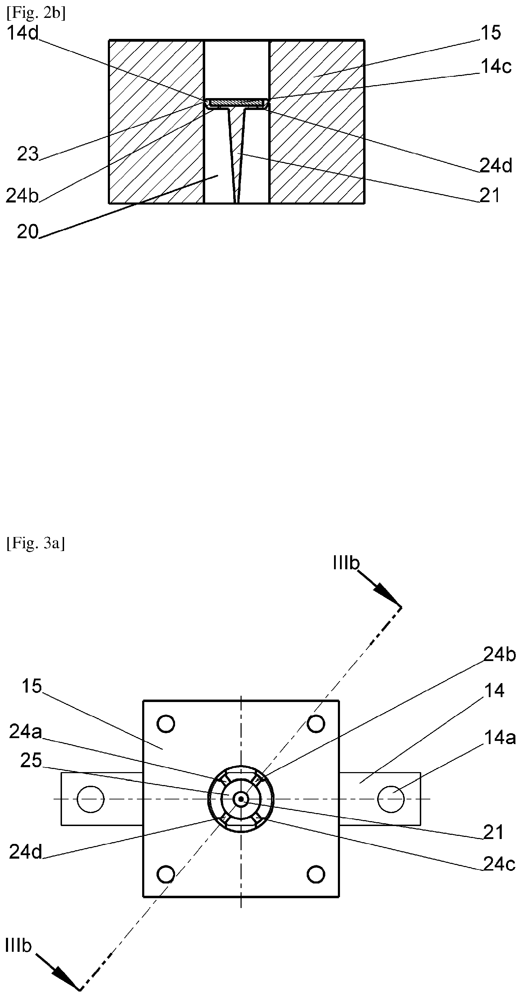

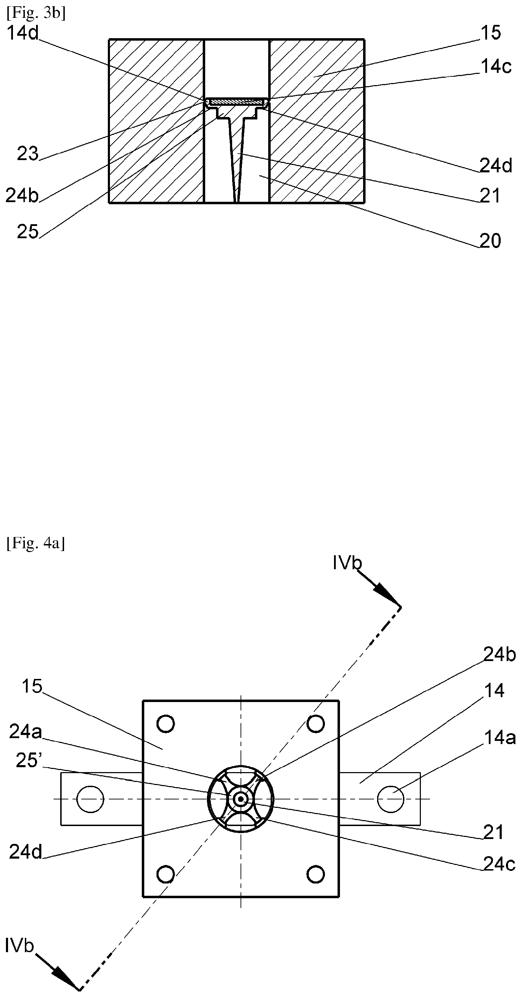

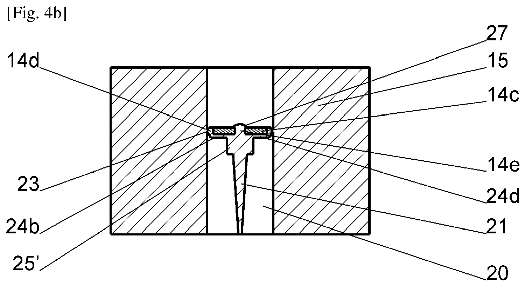

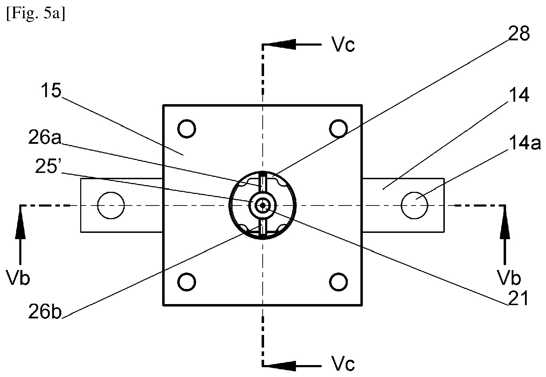

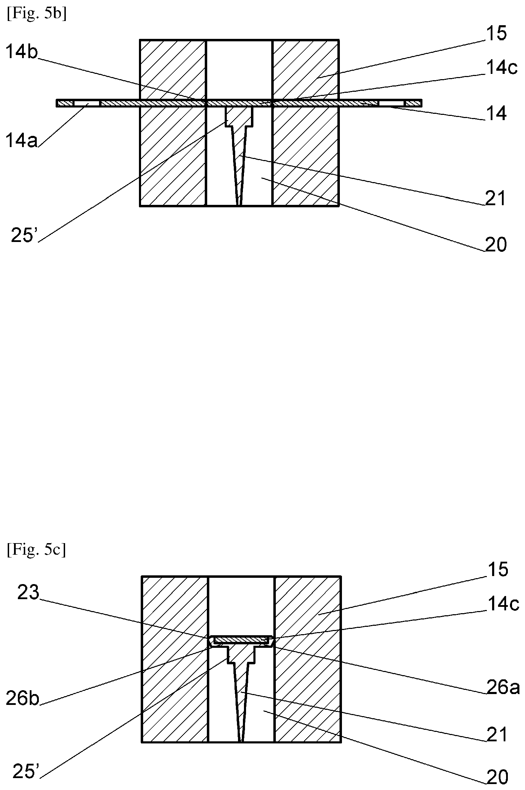

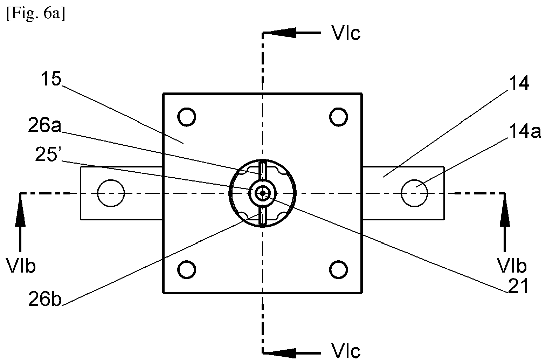

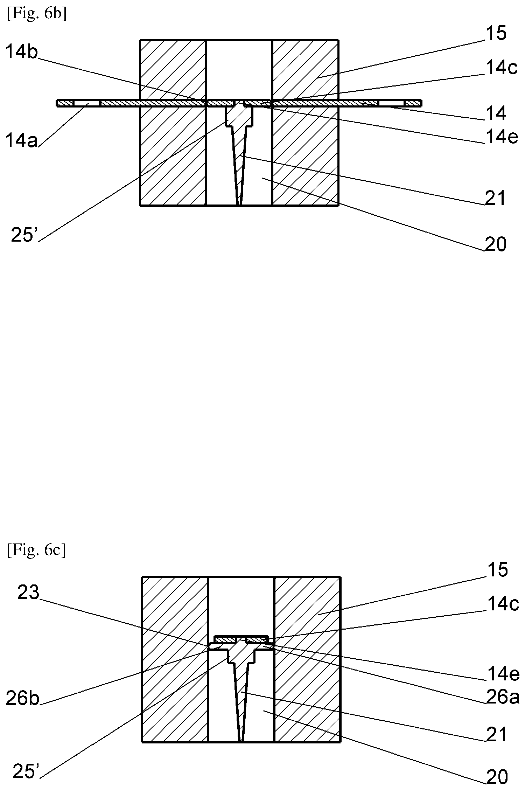

An Hand der beiliegenden Zeichnungen wird die vorliegende Erfindung näher erläutert. Es zeigt: Fig. 1a einen pyrotechnischen Stromtrenner mit einem Gehäuseunterteil, einem Gehäuseoberteil und einem dazwischenliegenden Leiter mit einer Leiterumspritzung, die einen Anguss und einen schirmförmigen Angussverteiler aufweist; Fig. 1b die Leiterumspritzung von unten; Fig. 1c den Leiter in Draufsicht; Fig. 1d einen Schnitt entlang der Linie Id-Id in Fig. 1b; Fig. 1e einen Schnitt entlang der Linie Ie-Ie in Fig. 1b; Fig. 2a eine andere Ausführungsform einer Leiterumspritzung von unten, mit vier diagonal liegenden Verteilerkanälen; Fig. 2b einen Schnitt entlang der Linie IIb-IIb in Fig. 2a; Fig. 3a und 3b Ansichten ähnlich wie Fig. 2a und 2b, jedoch mit einem Füllraum zwischen Anguss und Verteilerkanälen; Fig. 4a und 4b Ansichten ähnlich wie Fig. 3a und 3b, jedoch mit einem Leiter mit zentralem Loch; Fig. 5a eine andere Ausführungsform einer Leiterumspritzung von unten, mit zwei normal zur Leiter-Längsachse liegenden Verteilerkanälen; Fig. 5b einen Schnitt entlang der Linie Vb-Vb in Fig. 5a; Fig. 5c einen Schnitt entlang der Linie Vc-Vc in Fig. 5a; und die Fig. 6a bis 6c zeigen Ansichten ähnlich wie die Fig. 5a bis 5c, jedoch mit Anschnitten unterhalb der Leiterebene und mit einem Leiter mit einem zentralen Loch.

### Weg(e) zur Ausführung der Erfindung

Die Fig. 1a zeigt einen insgesamt mit 11 bezeichneten pyrotechnischen Stromtrenner. Dieser weist ein Gehäuse auf, das aus einem Gehäuseunterteil 12, einem Gehäuseoberteil 13 und einer dazwischen liegenden Leiterumspritzung 15 eines Leiters 14 zusammengesetzt ist. Die einzelnen Teile werden durch vier Schrauben 16 zusammengehalten.

Die Leiterumspritzung 15 wird gebildet, indem man den Leiter 14 in eine Spritzgussform legt und dann die Leiterumspritzung 15 durch Spritzgießen herstellt. Dies hat den Vorteil, dass herstellungsbedingt zwischen der Leiterumspritzung 15 und dem Leiter 14 keinerlei Spalt vorhanden sein kann, die Leiterumspritzung 15 liegt auch ohne irgendwelche zusätzlichen Dichtungen dicht am Leiter 14 an. Um das Gehäuse abzudichten, genügt es daher, den Gehäuseunterteil 12 und den Gehäuseoberteil 13 gegen die Leiterumspritzung 15 abzudichten, was relativ leicht möglich ist, weil Spritzgussteile im Gegensatz zu dem durch Stanzen hergestellten Leiter 14 keine scharfen Kanten haben. Man kann beispielsweise eine Nut 12a vorsehen, in die man einen O-Ring einlegt.

Die Leiterumspritzung 15 weist einen zentralen Hohlraum 20 auf. In diesem Hohlraum 20 ist zwischen dem Leiter 14 und dem Gehäuseoberteil 13 ein Trennkolben 19 angeordnet. Im Gehäuseoberteil 13 ist ein pyrotechnischer Zünder 17 angeordnet. Mittels eines Steckers 18 kann dieser mit einer Elektronikschaltung verbunden werden. Wenn die Elektronikschaltung ein Zündsignal generiert, erzeugt der Zünder 17 schlagartig einen Überdruck, der den Trennkolben 19 gegen den Leiter 14 drückt und dadurch das Mittelstück des Leiters 14, im Folgenden Platine 14c genannt, herausbricht.

Um dies zu erleichtern, weist der Leiter 14 (siehe auch Fig. 1c) beidseits der Platine 14c Sollbruchstellen 14b auf, die in Form von Kerben ausgebildet sind. Zusätzlich sind am Ende der Kerben Ausnehmungen bzw. Einschnitte 14d vorgesehen, sodass nicht nur die Dicke des Leiters 14 im Bereich der Sollbruchstellen 14b reduziert ist, sondern auch seine Breite. Auf diese Weise kann die Platine 14c leicht durch den Trennkolben 19 (siehe Fig. 1a) herausgestanzt werden. Der Leiter 14 (siehe auch Fig. 1c) weist an seinen Enden Löcher 14a auf, sodass jeweils ein Kabel angeschraubt werden kann. Solange der Leiter 14 intakt ist, sind die beiden angeschraubten Kabel miteinander elektrisch leitend verbunden. Sobald die Platine 14c herausgestanzt wird, werden sie elektrisch voneinander getrennt. Auf diese Weise lassen sich sehr hohe Spannungen (z.B. 500 V) trennen, auch wenn sehr hohe Ströme (z.B. 2000 A) fließen.

Für eine möglichst einfache Herstellung der Leiterumspritzung 15 ist ein zentraler Anguss 21 (siehe auch Fig. 1b, 1d und 1e) vorgesehen, durch welchen der flüssige Kunststoff der Spritzgussform zugeführt wird. Er verteilt sich über einen schirmförmigen Angussverteiler 22 nach außen und bildet dort die eigentliche Leiterumspritzung 15 aus. Der Übergang zwischen dem Angussverteiler 22 und der eigentlichen Leiterumspritzung 15 wird im Folgenden als Anschnitt 23 bezeichnet. Der Anguss 21 samt Angussverteiler 22 kann beim Anschnitt 23 abgetrennt werden, was weiter unten noch erläutert wird.

Gemäß einer bevorzugten Ausführungsform der Erfindung verbleibt der Anguss 21 aber im Stromtrenner 11. Wenn im Gehäuseunterteil 12 (siehe Fig. 1a) eine entsprechende Ausnehmung 31 vorgesehen ist, wirkt die Kombination von Anguss 21 und Ausnehmung 31 als Führung für die Platine 14c, während sie vom Trennkolben 19 nach unten bewegt wird, und bei entsprechend gewählten Durchmessern kann dadurch auch ein relativ sanftes Abbremsen der Platine 14c erzielt werden.

Wie man insbesondere aus Fig. 1d sieht, füllt der Kunststoff der Leiterumspritzung 15 die Kerben der Sollbruchstellen 14b auf der dem Anguss 21 zugewandten Seite aus, wodurch der Leiter 14 stabilisiert wird.

Die Ausführung gemäß den Fig. 2a und 2b unterscheidet sich von der eben beschriebenen Ausführungsform dadurch, dass an Stelle des schirmförmigen Angussverteilers 22 vier Verteilerkanäle 24a bis 24d vorgesehen sind. Diese Verteilerkanäle 24a bis 24d schließen mit der Längsachse des Leiters 14 einen Winkel von jeweils rund 45° ein, sodass sie im Bereich der Ausnehmungen 14d (siehe Fig. 1c) des Leiters 14 enden. Auf diese Weise können die Anschnitte 23 (siehe Fig. 2b) auf Höhe der Ebene des Leiters bzw. der Platine 14c liegen.

Die Ausführung gemäß den Fig. 3a und 3b unterscheidet sich von der Ausführung gemäß Fig. 2a und 2b lediglich dadurch, dass beim Spritzgießen zwischen dem Anguss 21 und den Verteilerkanälen 24a-24d ein Füllraum vorhanden war, der für das gleichmäßige Verteilen des Kunststoffs in die vier Verteilerkanäle 24a-24d hilfreich ist. Der dort verbliebene Kunststoff wird als Füllraumkunststoff 25 bezeichnet. Er verbessert die Verbindung zwischen Anguss 21 und Platine 14c.

Diese Verbindung kann noch zusätzlich dadurch stabilisiert werden, dass in der Platine 14c ein mittiges Loch 14e (siehe Fig. 4b) vorgesehen ist, durch welches der Kunststoff während des Spritzgießens hindurchtritt und dahinter eine Verbreiterung 27 bildet. Auf diese Weise entsteht sogar eine formschlüssige Verbindung zwischen dem Anguss 21 und der Platine 14c, sodass der Durchmesser des Füllraumkunststoffes 25' geringer ausgebildet sein kann als bei der zuvor beschriebenen Ausführungsform gemäß den Fig. 3a und 3b.

In den Fig. 5a bis 5c ist eine Ausführungsform gezeigt, wo zwei Verteilerkanäle 26a, 26b vorgesehen sind. Diese beiden Verteilerkanäle 26a, 26b verlaufen normal zur Längsachse des Leiters 14. Da die Breite des Leiters 14 geringer ist als der Durchmesser des Hohlraums 20, können die Anschnitte 23 auf der Höhe des Leiters 14 bzw. der Platine 14c liegen. Der Bereich 28 zwischen dem Leiter 14 und der Leiterumspritzung 15 kann dabei frei sein, er kann aber auch mit Kunststoff ausgefüllt sein.

Die Anschnitte 23 können aber auch darunter liegen, wie dies in den Fig. 6a bis 6c dargestellt ist. Diese Ausführungsform unterscheidet sich von der eben beschriebenen Ausführungsform zusätzlich dadurch, dass die Platine 14c ein mittiges Loch 14e aufweist, so wie dies bei der Ausführungsform gemäß Fig. 4b der Fall ist. Hier tritt der Kunststoff aber nicht bis in den Bereich oberhalb der Platine 14c aus, sodass man den Anguss 21 samt Füllraumkunststoff 25' und den Verteilerkanälen 26a, 26b leicht an den Anschnitten 23 abtrennen kann, indem man mit einem Stempel von oben auf das Loch 14e drückt.

## Patentansprüche

1. Verfahren zur Herstellung eines Leiters (14) für einen Stromtrenner (11), der zwischen zwei Leiterenden eine abzutrennende Platine (14c) aufweist, wobei der Leiter (14) eine Leiterumspritzung (15) aufweist, die einen Hohlraum (20) besitzt, in dem sich die Platine (14c) befindet, wobei weiters Kunststoffschmelze über zumindest einen Anguss (21) in eine Spritzgussform gespritzt wird, in der sich der Leiter (14) befindet, **dadurch gekennzeichnet, dass** der Anguss (21) aus dem leiterdurchsetzten Hohlraum (20) erfolgt, wobei die Kunststoffschmelze vom Anguss (21) zur eigentlichen Leiterumspritzung (15) durch einen Angussverteiler (22; 24a-24d; 26a, 26b) strömt.

2. Verfahren nach Anspruch 1, **dadurch gekennzeichnet, dass** der Anguss (21) samt Angussverteiler (22; 24a-24d; 26a, 26b) aus der Leiterumspritzung (15) vor dem Einbau in das Gehäuse des Stromtrenners (11) entfernt wird.

3. Verfahren nach Anspruch 2, **dadurch gekennzeichnet, dass** der Anguss (21) von der Leiterumspritzung (15) im Spritzgusswerkzeug abgetrennt, vorzugsweise abgestanzt, wird.

4. Verfahren nach Anspruch 3, **dadurch gekennzeichnet, dass** der Anguss (21) durch zumindest einen Auswerfer abgetrennt bzw. abgestanzt wird.

5. Verfahren nach Anspruch 2, **dadurch gekennzeichnet, dass** der Leiter (14) ein Loch (14e) hat und dass der Anguss (21) mittels eines Stempels, der durch dieses Loch (14e) geführt wird, abgetrennt wird.

6. Leiter (14) mit Leiterumspritzung (15), hergestellt nach Anspruch 1, wobei die Leiterumspritzung (15) einen Hohlraum (20), in dem sich eine Platine (14c) befindet, und einen Anguss (21) besitzt, **dadurch gekennzeichnet, dass** im Hohlraum (20) der Leiterumspritzung (15) der Anguss (21) samt Angussverteiler (22) vorhanden ist.

7. Leiter nach Anspruch 6, **dadurch gekennzeichnet, dass** der Angussverteiler (22) zumindest teilweise schirmförmig ist.

8. Leiter nach Anspruch 6 oder 7, **dadurch gekennzeichnet, dass** zwischen dem Anguss (21) und dem Angussverteiler (22; 24a-24d; 26a, 26b) ein Füllraumkunststoff (25, 25') vorhanden ist, der sich im Vergleich zum Anguss (21) weiter in Richtung der Wand des Hohlraums (20) erstreckt.

9. Leiter nach einem der Ansprüche 6 bis 8, **dadurch gekennzeichnet, dass** die Platine (14c) ein Loch (14e) besitzt und sich zumindest ein Teil des Angusses (21) durch dieses Loch (14e) erstreckt und vorzugsweise hinter dem Loch (14e) einen größeren Querschnitt aufweist, als es dem Querschnitt des Lochs (14e) entspricht.

10. Leiter nach einem der Ansprüche 6 bis 9, **dadurch gekennzeichnet, dass** der Angussverteiler durch mehrere Kanäle (24a-24d) gebildet ist, deren Anbindung an die Leiterumspritzung (15) im seitlichen Randbereich des Leiters (14) erfolgt.

11. Leiter nach Anspruch 10, **dadurch gekennzeichnet, dass** die Anbindung der Kanäle (24a-24d) an die Leiterumspritzung (15) Sollbruchstellen (14b) des Leiters (14) berührt.

12. Leiter nach einem der Ansprüche 6 bis 9, **dadurch gekennzeichnet, dass** die Anbindung des Angussverteilers (26a, 26b) an die Leiterumspritzung (15) in einer Ebene erfolgt, die einen Abstand zum Leiter (14) aufweist, vorzugsweise einen Abstand von zumindest 1 mm, besonders bevorzugt um zumindest 2 mm.

13. Leiter nach Anspruch 12, **dadurch gekennzeichnet, dass** der Angussverteiler zwei Verteilerkanäle (26a, 26b) hat, die normal auf die Längsachse des Leiters (14) stehen.

14. Leiter nach einem der Ansprüche 6 bis 13, **dadurch gekennzeichnet, dass** der Leiter (14) im Bereich des Eintretens in die Leiterumspritzung (15) eine Querschnittsverringerung besitzt.

15. Stromtrenner (11) mit einem Gehäuse, einem pyrotechnischen Zünder (17) und einem Trennkolben (19) zum Abtrennen einer Platine (14c) aus einem Leiter (14), **dadurch gekennzeichnet, dass** der Leiter (14) mit Leiterumspritzung (15) nach einem der Ansprüche 6 bis 14 ausgebildet ist.

## Claims

1. Method for producing a conductor (14) for a current breaker (11), the conductor comprising, between two conductor ends, a partition (14c) to be separated, wherein the conductor (14) comprises a conductor overmolding (15) having a cavity (20) in which the partition (14c) is arranged, wherein a plastic melt is injected via at least one sprue (21) into an injection mold in which the conductor (14) is located, **characterized in that** injection through the sprue (21) is performed from the cavity (20) penetrated by the conductor, and the plastic melt flows from the sprue (21) to the actual conductor overmolding (15) via a distributor (22; 24a-24d; 26a, 26b).

2. The method according to claim 1, **characterized in that** the sprue stub (21) together with the distributor stub (22; 24a-24d; 26a, 26b) is removed from the conductor overmolding (15) before installation into the housing of the current breaker (11).

3. The method according to claim 2, **characterized in that** the sprue stub (21) is separated, preferably punched off, from the conductor overmolding (15) in the injection molding tool.

4. The method according to claim 3, **characterized in that** the sprue stub (21) is separated or punched off by at least one ejector.

5. The method according to claim 2, **characterized in that** the conductor (14) has a hole (14e) and that the sprue stub (21) is separated by means of a punch which is guided through this hole (14e).

6. A conductor (14) with a conductor overmolding (15) produced according to claim 1, the conductor overmolding (15) comprising a cavity (20) in which the partition (14c) is located, and a sprue stub (21), **characterized in that** the sprue stub (21), including the distributor stub (22), is present in the cavity (20) of the conductor overmolding (15).

7. The conductor according to claim 6, **characterized in that** the distributor stub (22) is at least partially umbrella-shaped.

8. The conductor according to claim 6 or 7, **characterized in that** between the sprue stub (21) and the distributor stub (22; 24a-24d; 26a, 26b) there is a filling cavity stub (25, 25') which, compared to the sprue stub (21), extends further in the direction of the wall of the cavity (20).

9. The conductor according to one of claims 6 to 8, **characterized in that** the partition (14c) has a hole (14e) and at least a part of the sprue stub (21) extends through this hole (14e) and preferably has, behind the hole (14e), a larger cross-section than the cross-section of the hole (14e).

10. The conductor according to one of claims 6 to 9, **characterized in that** the distributor stub is formed by a plurality of channels (24a-24d), the connections of which to the conductor overmolding (15) being made in the lateral edge region of the conductor (14).

11. The conductor according to claim 10, **characterized in that** the connections of the channels (24a-24d) to the conductor overmolding (15) touch predetermined breaking points (14b) of the conductor (14).

12. The conductor according to one of claims 6 to 9, **characterized in that** the connections of the distributor (26a, 26b) to the conductor overmolding (15) are made in a plane which is spaced from the conductor (14), preferably at a distance of at least 1 mm, particularly preferably at least 2 mm.

13. The conductor according to claim 12, **characterized in that** the distributor comprises two distribution channels (26a, 26b) which are oriented perpendicular to the longitudinal axis of the conductor (14).

14. The conductor according to one of claims 6 to 13, **characterized in that** the conductor (14) has a cross-sectional reduction in the region of entry into the conductor overmolding (15).

15. A current breaker (11) comprising a housing, a pyrotechnic igniter (17) and a separating piston (19) for separating a partition (14c) from a conductor (14), **characterized in that** the conductor (14) with conductor overmolding (15) is formed according to one of claims 6 to 14.

## Revendications

1. Procédé de fabrication d'un conducteur (14) destiné à un séparateur de courant (11), le conducteur (14) comportant, entre deux extrémités, une partition (14c) à séparer, ledit conducteur (14) comportant un surmoulage de conducteur (15) présentant une cavité (20) dans laquelle est disposée la partition (14c), de la matière plastique fondue étant injectée dans un moule d'injection, dans lequel se trouve le conducteur (14), par au moins une carotte (21), **caractérisé en ce que** l'injection par la carotte (21) est réalisée à partir de la cavité (20) traversée par le conducteur, la matière plastique fondue s'écoulant de la carotte (21) vers le surmoulage proprement dit (15) du conducteur via un répartiteur (22; 24a-24d; 26a, 26b).

2. Procédé selon la revendication 1, **caractérisé en ce que** la carotte (21) ainsi que le répartiteur (22; 24a-24d; 26a, 26b) sont retirés du surmoulage de conducteur (15) avant l'installation dans le boîtier du séparateur de courant (11).

3. Procédé selon la revendication 2, **caractérisé en ce que** la carotte (21) est séparée, de préférence poinçonnée, du surmoulage de conducteur (15) dans le moule d'injection.

4. Procédé selon la revendication 3, **caractérisé en ce que** la carotte (21) est séparée ou poinçonnée à l'aide d'au moins un éjecteur.

5. Procédé selon la revendication 2, **caractérisé en ce que** le conducteur (14) présente un trou (14e) et que la carotte (21) est séparée à l'aide d'un poinçon guidé à travers ce trou (14e).

6. Conducteur (14) avec surmoulage de conducteur (15), fabriqué selon la revendication 1, ledit surmoulage de conducteur (15) présentant une cavité (20) dans laquelle est disposée la partition (14c), et une carotte (21), **caractérisé en ce que,** dans la cavité (20) du surmoulage de conducteur (15), la carotte (21) ainsi que le répartiteur (22) sont présents.

7. Conducteur selon la revendication 6, **caractérisé en ce que** le répartiteur (22) présente au moins partiellement une forme de parasol.

8. Conducteur selon la revendication 6 ou 7, **caractérisé en ce qu'**entre la carotte (21) et le répartiteur (22 ; 24a-24d ; 26a, 26b) se trouve une matière plastique d'une espace de remplissage (25, 25'), qui s'étend, comparée à la carotte (21), plus loin en direction de la paroi de la cavité (20).

9. Conducteur selon l'une quelconque des revendications 6 à 8, **caractérisé en ce que** la partition (14c) présente un trou (14e) et qu'au moins une partie de la carotte (21) s'étend à travers ce trou (14e) et de préférence présente derrière le trou (14e) une section transversale supérieure à celle du trou (14e).

10. Conducteur selon l'une quelconque des revendications 6 à 9, **caractérisé en ce que** le répartiteur est constitué de plusieurs canaux (24a-24d), dont l'entrée dans le surmoulage de conducteur (15) s'effectue dans la zone latérale du conducteur (14).

11. Conducteur selon la revendication 10, **caractérisé en ce que** l'entrée des canaux (24a-24d) dans le surmoulage de conducteur (15) touche des zones de rupture prédéfinies (14b) du conducteur (14).

12. Conducteur selon l'une quelconque des revendications 6 à 9, **caractérisé en ce que** l'entrée du répartiteur (26a, 26b) dans le surmoulage de conducteur (15) s'effectue dans un plan situé à une distance du conducteur (14), de préférence à une distance d'au moins 1 mm, plus particulièrement d'au moins 2 mm.

13. Conducteur selon la revendication 12, **caractérisé en ce que** le répartiteur comporte deux canaux de répartition (26a, 26b) qui sont orientés perpendiculairement à l'axe longitudinal du conducteur (14).

14. Conducteur selon l'une quelconque des revendications 6 à 13, **caractérisé en ce que** le conducteur (14) présente, dans la zone d'entrée dans le surmoulage de conducteur (15), une réduction de section.

15. Séparateur de courant (11) comportant un boîtier, un allumeur pyrotechnique (17) et un piston de séparation (19) destiné à séparer une partition (14c) d'un conducteur (14), **caractérisé en ce que** le conducteur (14) avec surmoulage de conducteur (15) est réalisé conformément à l'une quelconque des revendications 6 à 14.
